# EUROPEAN PATENT APPLICATION

(11) **EP 4 011 850 A1**
(43) Date of publication of application: **15.06.2022**
(21) Application number: 20020600.1
(22) Date of filing: 09.12.2020
(51) Int. Cl.: C04B 7/43, C04B 7/46

(54) **METHOD OF PRODUCING CLINKER FORM CEMENT RAW MEAL**

(71) Applicant: Holcim Technology Ltd, 6300 Zug (CH)
(72) Inventor: Bucher, Ernst, CH-5113 Holderbank (CH); Brusco, Guillermo, CH-5113 Holderbank (CH); Blum, Rudy, CH-5113 Holderbank (CH); Stoffel, Beat, CH-5113 Holderbank (CH); Weihrauch, Michael, CH-5113 Holderbank (CH)
(74) Representative: Keschmann, Marc

(57) **Abstract**

A method of producing clinker from cement raw meal, comprising the steps of:
- preheating cement raw meal in a preheater string, said preheater string comprising a plurality of preheater stages,
- pre-calcining preheated raw meal in a pre-calciner to obtain a pre-calcined product,
- introducing the pre-calcined product into a rotary kiln for calcining the pre-calcined product to obtain cement clinker,
wherein a partial flow of at least partly preheated raw meal is diverted from the preheater string, introduced into a calcination device and at least partially decarbonated in the calcination device in order to obtain an at least partially decarbonated product and CO₂, wherein the calcination device is heated by electrical energy, and wherein the at least partially decarbonated product is fed into the rotary kiln and the CO₂ is drawn off from the calcination device.

## Description

The invention relates to a method of producing clinker from cement raw meal and a device for carrying out said method.

In known processes for producing cement clinker, raw material is fed into a rotary kiln after it has been preheated and partially decarbonated in a multistage preheater system by using the heat of combustion gases exhausted from the rotary kiln. The preheated raw material is fed into the rotary kiln via the kiln inlet and travels to the kiln outlet while being calcined at temperatures of up to 1400°C.

Carbon dioxide (CO₂) is the most significant long-lived greenhouse gas in the Earth's atmosphere. The use of fossil fuels and deforestation have rapidly increased its concentration in the atmosphere, leading to global warming. Carbon dioxide also causes ocean acidification, because it dissolves in water to form carbonic acid.

The cement industry is an important emitter of CO₂. Within the cement production process, significant amounts of CO₂ are generated during the decarbonation of raw meal (containing CaCO₃) to lime (CaO). During the production of Portland cement clinker about 0,9 tons of CO₂ per ton of Portland cement clinker are emitted by the calcination of the raw materials and from the fuel combustion in the rotary kiln.

The use of alternative fuels, in particular renewable fuels, in the rotary kiln burner may reduce the amounts of greenhouse gases. However, substantial amounts of CO₂ are still produced by the decarbonation of raw meal and emitted into the atmosphere.

It has been proposed to use carbon capture and sequestration methods in order to reduce or prevent the emission of CO₂ from industrial processes into the atmosphere. Such methods comprise capturing CO₂ from flue gases for storage or for use in other industrial applications. However, such methods require the separation of CO₂ form the flue gases, wherein respective separation plants involve high capital and operating expenditures.

Therefore, the instant invention aims at further reducing the CO₂ footprint of a cement plant without significantly increasing the capital and operating expenditures.

In order to solve these objectives, the invention provides a method of producing clinker from cement raw meal, comprising the steps of:
- preheating cement raw meal in a preheater string, said preheater string comprising a plurality of preheater stages,
- pre-calcining preheated raw meal in a pre-calciner to obtain a pre-calcined product,
- introducing the pre-calcined product into a rotary kiln for calcining the pre-calcined product to obtain cement clinker,
wherein a partial flow of at least partly preheated raw meal is diverted from the preheater string, introduced into a calcination device and at least partially decarbonated in the calcination device in order to obtain an at least partially decarbonated product and CO₂, wherein the calcination device is heated by electrical energy, and wherein the at least partially decarbonated product is fed into the rotary kiln and the CO₂ is drawn off from the calcination device.

The invention is based on the idea to use electrical energy to decarbonize raw meal instead of burning fossil fuels. The process of the present invention enables an efficient use of electrical energy for the production of cement, and reduces the use of fossil fuels and other alternative fuels which are traditionally used in the cement process. This enables the reduction of the CO₂ footprint of the production of clinker, as electricity has a lower CO₂ footprint than fossil or alternative fuels.

Since the heat that is required to decarbonize raw meal is generated by the use of electrical energy in the calcination device, the combustion of fuel, such as fossil fuel, in the calcination device can be eliminated.

Another advantage of the invention is that the exhaust gas from the calcination device, where no fuel is burnt, is substantially pure CO₂, so that the process does without the requirement to separate CO₂ from flue gasses. Rather, the exhaust gas (CO₂) drawn off from the calcination device may directly be used in a CO₂ processing or sequestration unit.

According to the invention, not the entire flow of raw meal from the preheater string is calcined in the electrical calcination device, but only a partial flow of solid material is diverted from the preheater string and introduced into the calcination device. The use of a partial flow allows that the raw meal is to the largest possible extend separated from the flue gas prior to the following calcination process and thus a very pure CO₂ can be extracted from the calcination device.

The partial flow diverted from the preheater string may preferably be 20-80 wt.-%, preferably 30-50 wt.-% of the total flow of raw meal.

According to a preferred embodiment of the invention, the at least partly preheated raw meal is extracted from the preheater string at a temperature of 650-750°C, preferably 680-720°C. Such temperatures are typically occurring in one of the lower preheater stages of the preheater string. The preheaters are preferably realized as cyclone suspension type preheaters.

According to a preferred embodiment, the preheater string comprises at least a lowest and a second-lowest preheater stage, each preheater stage comprising a riser duct and a cyclone. In the riser duct, hot gas ascends and entrains raw meal that is injected into the side of the duct. Once the mixture of hot gas and raw meal enters into the cyclone, the mixture is separated: the heated meal leaves the preheater stage via the solids outlet and passes down to the next lower stage, and the cooled gas passes to the next upper stage, entering the riser duct of the next upper stage. Preferably, the at least partly preheated raw meal to be introduced into the calcination device is extracted from the preheater string at the solids outlet of the second-lowest preheater stage and the at least partially decarbonated product extracted from the calcination device is returned downstream of the solids outlet of the lowest preheater stage. In particular, the at least partially decarbonated product extracted from the calcination device is fed into a duct that connects the solids outlet of the lowest preheater stage with the rotary kiln inlet or directly into the rotary kiln inlet.

Preferably, the at least partly preheated raw meal is extracted from the preheater string via a separation device, such as a cyclonic separation device, in order to minimize the amount of gas entrained into the calcination device.

Preferably, the inlet and the outlet of the calcination device are each connected to the preheater string via a pressure sluice or an air-lock, such as a double flap. In this way, the calcination device is pressure-wise to a large extent isolated from the preheater so that flue gas from the preheater string and any other false air is prevented from entering into the calcination device.

Preferably, the calcination device is kept at an overpressure relative to the extraction site of the preheater stage, from which the at least partially preheated raw meal is extracted, and relative to the return site of the preheater stage, to which the at least partially decarbonated product is returned. Preferably, the overpressure in the calcination device is controlled by controlling the amount of CO₂ that is extracted from the calcination device. This concept increases safety and minimizes the ingress of false air from the ambient. False air could dilute the CO₂ generated in the calcination device.

Preferably, the at least partly preheated raw meal is heated to a temperature of 750-950°C, preferably 800-950°, most preferably 850-900°C, in the calcination device. In this way, the temperature within the calcination device is selected in order to specifically decarbonate the limestone component within the raw meal. This enables the production of an exhaust gas that is rich in CO₂ which can later be captured and either used as a raw material for the production of synthetic fuel or plastic components, or sequestrated.

Various types of calcination devices may be suitable for decarbonating at least partially preheated raw meal by use of electrical energy. In preferred embodiments of the calcination device, the raw meal is transported from the raw meal inlet to the raw meal outlet of the device while being heated. In particular, conveying means may be provided for transporting raw meal from the raw meal inlet to the raw meal outlet of the device while being heated, in order to achieve an efficient energy transfer to the raw meal.

The electrical heating means may be configured to provide indirect heating of the raw meal. For example, a solid heat transfer medium is heated by electrical energy, which is contacted with the raw meal in order to transfer thermal energy to the raw meal by thermal conduction.

According to a preferred embodiment, the at least partly preheated raw meal is transported through the calcination device by means of a screw conveyor while being at least partially decarbonated. A screw conveyor is characterised by a direct contact between the raw meal and the conveying means, i.e. the conveyor screw of the screw conveyor, wherein a large surface area is provided for transferring heat to the raw meal.

Preferably, the calcination device is configured as a screw conveyor.

Preferably, a conveyor screw of the screw conveyor is configured as a heating element that is heated by electrical energy, such as by resistance heating.

The CO₂ produced in the calcination device has a temperature of approximately 850 to 900°C so that its thermal energy can be recycled before further processing the CO₂. In this connection, a preferred embodiment provides that the CO₂ drawn off from the calcination device is fed through a heat exchanger, in which a fluid or gaseous medium is heated by heat exchange with the CO₂.

In particular, heat obtained by heat exchange with the CO₂ may be used in a thermodynamic cycle to evaporate a working fluid of said thermodynamic cycle, such as disclosed in WO 2015/059547. The thermodynamic cycle may preferably be designed as a gas turbine process or as an Organic Rankine Cycle.

Preferably, a gas turbine of the gas turbine process or of the Organic Rankine Cycle may be used to generate electrical energy by means of an electrical generator and the electrical energy may optionally be fed to the calcination device for electrically heating the same.

The CO₂ draw off from the calcination device may be processed in various ways. It may be used as a raw material for the production of synthetic fuel or plastic components, or it may be sequestrated. It can be stored in different ways, such as, e.g., in stable carbonate mineral forms. The respective process is known as "carbon sequestration by mineral carbonation". The process involves reacting carbon dioxide with a carbonatable solid material, said material comprising metal oxides, in particular magnesium oxide (MgO) or calcium oxide (CaO), to form stable carbonates.

Alternatively, it is also possible to convert the CO₂ into a synthetic fuel by adding H₂.

The synthetic fuel may be used in many ways, e.g. as an alternative fuel for the kiln burner of a cement kiln. In this way, an additional decrease of the CO₂ footprint of the clinker production process is achieved. Alternatively, the synthetic fuel may be used as a fuel for other industries, e.g. as renewable aviation fuel.

According to a further aspect of the invention, a device for carrying out the inventive method is provided, comprising:
- a preheater string for preheating cement raw meal, said preheater string comprising a plurality of preheater stages,
- a pre-calciner for pre-calcining preheated raw meal to obtain a pre-calcined product,
- a rotary kiln for calcining the pre-calcined product to obtain cement clinker,
- a calcination device having electrical heating means, said calcination device comprising an inlet that is connected to the preheater string to divert a partial flow of at least partly preheated raw meal from the preheater string and introduce the same into the calcination device in order to obtain an at least partially decarbonated product and CO₂, said calcination device comprising an outlet that is connected to the rotary kiln for feeding the at least partially decarbonated product into the rotary kiln, and said calcination device comprising a CO₂ discharge opening for drawing off the CO₂ from the calcination device.

Preferably, the calcination device comprises at least one contact heating element that is arranged to be in heat exchanging contact with the at least partly preheated raw meal while the same is being conveyed from the inlet to the outlet, wherein said at least one contact heating element is configured to be heated by the electrical heating means.

Preferably, the calcination device comprises a screw conveyor for conveying the at least partly preheated raw meal from the inlet to the outlet. A screw conveyor is understood to be a mechanism that uses a rotating helical screw blade, the conveyor screw, arranged within a tube, to move the raw meal along the rotation axis of the screw from an inlet to an outlet of the conveyor.

Preferably, a conveyor screw of the screw conveyor is configured as the at least one contact heating element.

In particular, an electrically heated screw conveyor as described in WO 2019/228696 may be used.

Preferably, the electrical heating means is configured as a resistance heating. In particular, the conveyor screw of the screw conveyor is heated by electrical resistance heating.

Preferably, the CO₂ discharge opening is connected to a heat exchanger, in which a fluid or gaseous medium is heated by heat exchange with the CO₂.

Preferably, a thermodynamic cycle is provided which comprises an evaporator and which is arranged so that heat obtained by heat exchange with the CO₂ is used in the thermodynamic cycle to evaporate a working fluid of said thermodynamic cycle in said evaporator.

Preferably, the thermodynamic cycle is designed as a gas turbine process or as an Organic Rankine Cycle.

Preferably, a gas turbine of the gas turbine process or of the Organic Rankine Cycle is connected to an electrical generator and the electrical energy generated by said electrical generator is optionally fed to the calcination device for electrically heating the same.

The invention will now be described in more detail with reference to the attached drawing.

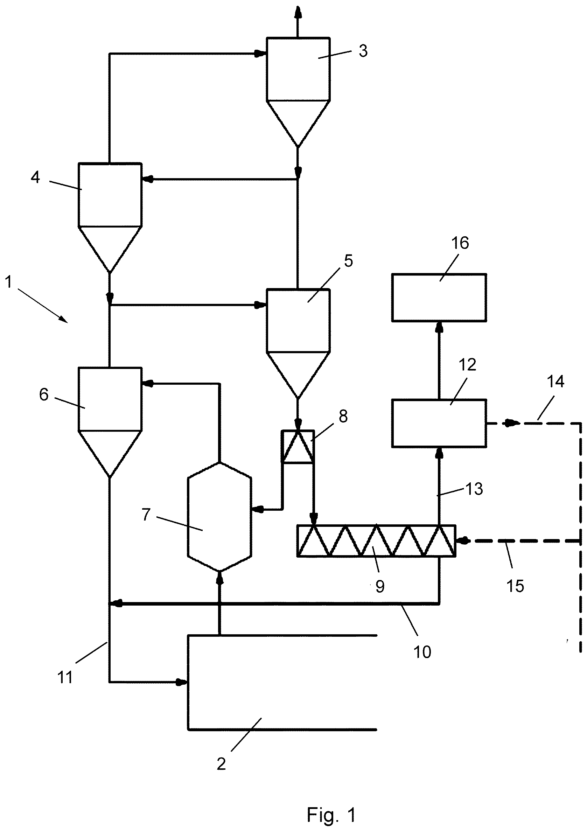

Fig. 1 schematically illustrates a cement production process, into which the inventive method has been incorporated. In the cement clinker production plant ground raw meal is charged into a preheater string 1, where it is preheated in counter-current to the hot exhaust gases coming from a rotary clinker kiln 2. The preheater string 1 comprises a plurality of interconnected cyclone suspension-type preheater stages 3, 4, 5 and 6. Further, a pre-calciner 7 is provided that is heated by burning a fuel.

The preheated and pre-calcined raw meal is then introduced into the rotary kiln 2, where it is calcined to obtain cement clinker. The clinker leaves the rotary kiln 2 and is cooled in a clinker cooler (not shown).

At least partially preheated raw meal is taken from the preheater string 1 directly downstream of the second lowest preheater 5 at a temperature of approximately 700°C and fed into a devider 8, where the raw meal is divided into a first partial flow and a second partial flow. The first partial flow is fed into the pre-calciner 7 and the second partial flow is introduced into the electrically heated calcination device 9, where the raw meal is heated to approximately 900°C and at least partially decarbonated while producing CO₂. The at least partially decarbonated product that leaves the calcination device 9 is fed into the kiln 2 via lines 10 and 11. The CO₂ is withdrawn from the calcination device 9 and fed into a heat recovery device 12 via the line 13.

In the heat recovery device 12, CO₂ is cooled, wherein the heat draw from the CO₂ is used to produce electrical energy, such as by means of a thermodynamic cycle. The electrical energy is fed to the heating means of the electrical calcination device 9 via the electrical lines 14 and 15. The electrical energy may also be used in other devices.

Further, the cooled CO2 exiting the heat recovery device 12 may be introduced into a storage 16 for further processing.

## Claims

1. A method of producing clinker from cement raw meal, comprising the steps of:
- preheating cement raw meal in a preheater string, said preheater string comprising a plurality of preheater stages,
- pre-calcining preheated raw meal in a pre-calciner to obtain a pre-calcined product,
- introducing the pre-calcined product into a rotary kiln for calcining the pre-calcined product to obtain cement clinker,
wherein a partial flow of at least partly preheated raw meal is diverted from the preheater string, introduced into a calcination device and at least partially decarbonated in the calcination device in order to obtain an at least partially decarbonated product and CO₂, wherein the calcination device is heated by electrical energy, and wherein the at least partially decarbonated product is fed into the rotary kiln and the CO₂ is drawn off from the calcination device.

2. Method according to claim 1, wherein the at least partly preheated raw meal is extracted from the preheater string at a temperature of 650-750°C, preferably 680-720°C.

3. Method according to claim 1 or 2, wherein the at least partly preheated raw meal is heated to a temperature of 750-950°C, preferably 800-950°, most preferably 850-900°C, in the calcination device.

4. Method according to claim 1, 2 or 3, wherein decarbonating the at least partly preheated raw meal comprises converting limestone into CaO and CO₂.

5. Method according to any one of claims 1 to 4, wherein the least partly preheated raw meal is transported through the calcination device by means of a screw conveyor while being at least partially decarbonated.

6. Method according to any one of claims 1 to 5, wherein the calcination device is configured as a screw conveyor.

7. Method according to claim 6, wherein a conveyor screw of the screw conveyor is configured as a heating element that is heated by electrical energy, such as by resistance heating.

8. Method according to any one of claims 1 to 7, wherein the CO₂ drawn off from the calcination device is fed through a heat exchanger, in which a fluid or gaseous medium is heated by heat exchange with the CO₂.

9. Method according to claim 8, wherein heat obtained by heat exchange with the CO₂ is used in a thermodynamic cycle to evaporate a working fluid of said thermodynamic cycle.

10. Method according to claim 9, the thermodynamic cycle is designed as a gas turbine process or as an Organic Rankine Cycle.

11. Method according to claim 10, wherein a gas turbine of the gas turbine process or of the Organic Rankine Cycle is used to generate electrical energy by means of an electrical generator and wherein the electrical energy is optionally fed to the calcination device for electrically heating the same.

12. Method according to claim any one of claims 1 to 11, wherein the CO₂ drawn off from the calcination device is fed to a reactor, in which CO₂ and further reactants are transformed into a synthetic fuel.

13. A device for carrying out a method according to any one of claims 1 to 12, comprising:
- a preheater string for preheating cement raw meal, said preheater string comprising a plurality of preheater stages,
- a pre-calciner for pre-calcining preheated raw meal to obtain a pre-calcined product,
- a rotary kiln for calcining the pre-calcined product to obtain cement clinker,
- a calcination device having electrical heating means, said calcination device comprising an inlet that is connected to the preheater string to divert a partial flow of at least partly preheated raw meal from the preheater string and introduce the same into the calcination device in order to obtain an at least partially decarbonated product and CO₂, said calcination device comprising an outlet that is connected to the rotary kiln for feeding the at least partially decarbonated product into the rotary kiln, and said calcination device comprising a CO₂ discharge opening for drawing off the CO₂ from the calcination device.

14. Device according to claim 13, wherein the calcination device comprises at least one contact heating element that is arranged to be in heat exchanging contact with the at least partly preheated raw meal while the same is being conveyed from the inlet to the outlet, wherein said at least one contact heating element is configured to be heated by the electrical heating means.

15. Device according to claim 13 or 14, wherein the calcination device comprises a screw conveyor for conveying the at least partly preheated raw meal from the inlet to the outlet.

16. Device according to claim 15, wherein a conveyor screw of the screw conveyor is configured as the at least one contact heating element.

17. Device according to claim 15 or 16, wherein the electrical heating means is configured as a resistance heating.

18. Device according to any one of claims 13 to 17, wherein the CO₂ discharge opening is connected to a heat exchanger, in which a fluid or gaseous medium is heated by heat exchange with the CO₂.

19. Device according to any one of claims 13 to 18, wherein a thermodynamic cycle is provided, which comprises an evaporator and which is arranged so that heat obtained by heat exchange with the CO₂ is used in the thermodynamic cycle to evaporate a working fluid of said thermodynamic cycle in said evaporator.

20. Device according to claim 19, wherein the thermodynamic cycle is designed as a gas turbine process or as an Organic Rankine Cycle.

21. Device according to claim 20, wherein a gas turbine of the gas turbine process or of the Organic Rankine Cycle is connected to an electrical generator and wherein the electrical energy generated by said electrical generator is optionally fed to the calcination device for electrically heating the same.
